# EUROPEAN PATENT APPLICATION

(11) **EP 3 015 441 A1**
(43) Date of publication of application: **04.05.2016**
(21) Application number: 14817027.7
(22) Date of filing: 25.06.2014
(51) Int. Cl.: C04B 35/66, C03B 5/43

(54) **POWDER COMPOSITION FOR TIN OXIDE MONOLITHIC REFRACTORY, PRODUCTION METHOD FOR TIN OXIDE MONOLITHIC REFRACTORY, GLASS MELTING FURNACE, AND WASTE-PRODUCT MELTING FURNACE**

(30) Priority: 26.06.2013 JP 2013133688
(71) Applicant: Asahi Glass Company, Limited, Tokyo 100-8405 (JP)
(72) Inventor: OGAWA, Shuhei, Tokyo 100-8405 (JP); SHINOZAKI, Yasuo, Tokyo 100-8405 (JP)
(74) Representative: Müller-Boré & Partner Patentanwälte PartG mbB
(86) International application number: PCT/JP2014/066889
(87) International publication number: WO 2014/208620

(57) **Abstract**

To provide a powder composition to obtain a tin oxide monolithic refractory which prevents volatilization of SnO₂ in a high temperature zone from an early stage and which also has high erosion resistance to slag.

As a refractory mixture, a powder composition for tin oxide monolithic refractory comprising SnO₂, ZrO₂ and SiO₂ as essential components, wherein the total content of SnO₂, ZrO₂ and SiO₂ in the refractory mixture is at least 70 mass%, and, based on the total content of SnO₂, ZrO₂ and SiO₂, the content of SnO₂ is from 55 to 98 mol%, the content of ZrO₂ is from 1 to 30 mol% and the content of SiO₂ is from 1 to 15 mol%.

## Description

### TECHNICAL FIELD

The present invention relates to a powder composition for tin oxide monolithic refractory, a method for producing a tin oxide monolithic refractory, a glass melting furnace and a waste melting furnace, particularly to a powder composition to obtain a tin oxide monolithic refractory which contains SnO₂, ZrO₂ and SiO₂ as essential components and which effectively prevents volatilization of SnO₂ without substantially lowering erosion resistance to slag, by the presence of the predetermined amounts of such components, and a method for producing a monolithic refractory, a glass melting furnace and a waste melting furnace, by utilizing it.

### BACKGROUND ART

Refractories to be used for glass melting furnaces or waste melting furnaces are generally classified into shaped refractories and monolithic refractories. Application of shaped refractories is basically bricklaying work and requires hard work and a high level of technique, and therefore, in recent years, lining by monolithic refractories has been commonly employed.

Materials which have been used as monolithic refractories for melting furnaces, are zirconia or chromia monolithic refractories for the production of glass, and alumina/chromium oxide monolithic refractories for the waste melting furnaces. However, these materials had problems such that zirconia monolithic refractories were poor in erosion resistance, and chromia monolithic refractories were, although the erosion resistance was high, likely to form hexavalent chrome, whereby slag and the wastes of the refractories after use, would bring about environmental pollution.

In such a background situation, a tin oxide refractory obtained by sintering a refractory composition containing SnO₂ as the main component, has very high erosion resistance against slag, as compared with commonly employed refractories, and is now being studied for use as a refractory for a glass melting furnace or a waste melting furnace.

For example, Patent Document 1 has proposed a dense tin oxide refractory for a glass melting furnace containing from 85 to 99 wt% of SnO₂. However, no case has been known in which such a refractory is practically reused as a refractory for a portion in contact with glass in a glass production apparatus. Further, Patent Document 2 has proposed a monolithic refractory for a waste melting furnace containing from 0.5 to 40 wt% of SnO₂, but there has been no proposal for a monolithic refractory containing more than 40 wt% of SnO₂.

The reason is that as a basic characteristic, SnO₂ has such a nature that it volatilizes as SnO in a high temperature zone, particularly in a high temperature zone of at least 1,200°C. Such volatilization is considered to bring about such a problem that the structure of the refractory tends to be porous and brittle, and the refractory tends to peel off, or in the production of glass, a volatilized SnO component tends to be concentrated and coagulated in a low temperature zone in the glass production apparatus, so that a SnO₂ component will fall and be included as a foreign matter in glass, thus leading to deterioration of the yield in the production of a molded product of glass. Further, in a case where SnO₂ is used as refractory material for a monolithic refractory, tin oxide particles tend to become brittle due to such volatilization even before infiltration of slag, whereby erosion resistance to slag will be substantially deteriorated.

On the other hand, a tin oxide sintered body is used as an electrode material for glass melting in a high temperature zone. Usually, such a tin oxide electrode material is made of from 90 to 98 mass% of SnO₂ and from about 0.1 to 2.0 mass% of a sintering assistant and an agent to reduce electrical resistance, and is utilized as a material having both properties of high erosion resistance to molten glass and low electrical resistance sufficient for power distribution. However, such a common tin oxide electrode material tended to gradually volatilize as SnO in a high temperature zone, particularly in a high temperature zone of at least 1,200°C, whereby deterioration was unavoidable.

As a conventional technique to solve the problem of volatilization of SnO₂ in a high temperature zone, Non-patent Document 1 has reported on a tin oxide sintered body wherein 0.5 mol% of CoO as a sintering assistant is incorporated to a tin oxide powder and from 0 to 10 mol% of ZrO₂ as a volatilization preventing component is incorporated based on the total content of ZrO₂ and SnO₂, to prevent volatilization of SnO₂.

Further, Patent Document 3 has proposed an electrode material for a glass melting furnace, wherein together with a sintering assistant and an agent to reduce electrical resistance, as a volatilization preventing agent, a Y component being an oxide such as ZrO₂, HfO₂, TiO₂, Ta₂O₅ or CeO₂ is incorporated in an amount of from 0 to 8 mass% based on the total content of Y and SnO₂, to prevent volatilization of SnO₂.

Further, Patent Document 2 has proposed a monolithic refractory for a waste melting furnace, containing from 0.5 to 40 wt% of SnO₂, as an example where SnO₂ is used as refractory material for a monolithic refractory.

These tin oxide sintered bodies containing a volatilization preventing component have a structure having the volatilization preventing component solid-solubilized inside of the tin oxide particles, and when SnO₂ volatilizes in a high temperature zone, the volatilization preventing component solid-solubilized inside of the tin oxide particles will be concentrated and will be precipitated on the tin oxide particle surface to cover the tin oxide particle surface, whereby it is possible to prevent volatilization of SnO₂.

### PRIOR ART DOCUMENTS

### PATENT DOCUMENTS

Patent Document 1: JP-A-54-132611
Patent Document 2: JP-A-2004-196637
Patent Document 3: WO2006/124742

### NON-PATENT DOCUMENT

Non-patent Document 1: Maitre, D. Beyssen, R. Podor, "Effect of ZrO2 additions on sintering of SnO2-based ceramics", Journal of the European Ceramic Society, 2004, Vol. 24, p.3111-3118

### DISCLOSURE OF INVENTION

### TECHNICAL PROBLEM

However, the above SnO₂ volatilization preventing component starts to be precipitated on the tin oxide particle surface for the first time when it has been concentrated in the tin oxide particles to exceed its solid solubility limit concentration by volatilization of SnO₂, and therefore, at the initial stage after beginning of volatilization of SnO₂, the volatilization preventing component is not sufficiently precipitated on the tin oxide particle surface, and an excellent volatilization preventing effect is not provided from the initial stage after beginning of the volatilization. Therefore, if a tin oxide refractory is used as a component for a long period of time, the deterioration of the component due to volatilization of SnO₂ is unavoidable.

Accordingly, in a case where such a tin oxide refractory is used at a high temperature zone, a problem is considered to be likely to occur such that due to brittleness of the refractory structure, the refractory tends to peel off, or in the production of glass, a volatilized SnO component tends to be concentrated and condensed in a low temperature zone in the glass melting apparatus, so that the resulting SnO₂ component will fall and be included as a foreign matter in glass, thus leading to deterioration of the yield in the production of a molded product of glass. Further, in a case where SnO₂ is used as refractory material for a monolithic refractory, tin oxide particles tend to become brittle due to the volatilization even before infiltration of slag, whereby erosion resistance to slag will be substantially lowered.

Therefore, it is an object of the present invention to solve the above problem of the prior art and to provide a powder composition capable of providing a tin oxide monolithic refractory which prevents volatilization of SnO₂ in a high temperature zone from an early stage and also has a high erosion resistance to slag, and which is useful as a refractory for a glass melting furnace or a waste melting furnace, a method for producing a tin oxide monolithic refractory, a glass melting furnace, and a waste melting furnace.

### SOLUTION TO PROBLEM

[1] A powder composition for tin oxide monolithic refractory comprising a refractory mixture containing SnO₂, ZrO₂ and SiO₂ as essential components, wherein the total content of SnO₂, ZrO₂ and SiO₂ in the refractory mixture is at least 70 mass%, and, based on the total content of SnO₂, ZrO₂ and SiO₂, the content of SnO₂ is from 55 to 98 mol%, the content of ZrO₂ is from 1 to 30 mol% and the content of SiO₂ is from 1 to 15 mol%.
[2] The powder composition for tin oxide monolithic refractory according to [1], wherein the total content of SnO₂, ZrO₂ and SiO₂ in the refractory mixture is at least 95 mass%.
[3] The powder composition for tin oxide monolithic refractory according to [1] or [2], wherein, based on the total content of SnO₂, ZrO₂ and SiO₂, the content of SnO₂ is from 70 to 98 mol%, the content of ZrO₂ is from 1 to 20 mol% and the content of SiO₂ is from 1 to 10 mol%.
[4] The powder composition for tin oxide monolithic refractory according to [3], wherein, based on the total content of SnO₂, ZrO₂ and SiO₂, the content of SnO₂ is from 83 to 98 mol%, the content of ZrO₂ is from 1 to 12 mol% and the content of SiO₂ is from 1 to 5 mol%.
[5] The powder composition for tin oxide monolithic refractory according to any one of [1] to [4], which contains in the refractory mixture from 1 to 10 mass% of a fine powder inclusive of a finer powder, containing at least one member selected from the group consisting of tin oxide particles, zircon particles and solid-solution particles of tin oxide and zirconia, of at most 10 µm.
[6] The powder composition for tin oxide monolithic refractory according to any one of [1] to [5], which contains in the refractory mixture from 1 to 10 mass% of a finer powder containing at least one member selected from the group consisting of tin oxide particles, zircon particles and solid-solution particles of tin oxide and zirconia, of at most 3 µm.
[7] The powder composition for tin oxide monolithic refractory according to any one of [1] to [6], which further contains in the refractory mixture at least one component selected from the group consisting of oxides of CuO, ZnO, MnO, CoO and Li₂O.
[8] The powder composition for tin oxide monolithic refractory according to any one of [1] to [7], which contains a dispersant in an amount of from 0.01 to 2 mass% to the mass of the refractory mixture.
[9] The powder composition for tin oxide monolithic refractory according to any one of [1] to [8], which contains, as a binder, at least one member selected from the group consisting of alumina cement and colloidal alumina, and the content of the binder in the refractory mixture is at most 5 mass%.
[10] The powder composition for tin oxide monolithic refractory according to any one of [1] to [9], wherein as the refractory mixture, tin oxide particles wherein from 1 to 25 mol% of ZrO₂ is solid-solubilized, are used.
[11] The powder composition for tin oxide monolithic refractory according to any one of [1] to [10], wherein when the powder composition for tin oxide monolithic refractory is heat-treated at 1,300°C for 350 hours after its application, a zircon phase and a zirconia phase are formed on the surface of tin oxide particles.
[12] A method for producing a tin oxide monolithic refractory, which comprises kneading the powder composition for tin oxide monolithic refractory as defined in any one of [1] to [11], with water, followed by its application.
[13] The method for producing a tin oxide monolithic refractory according to [12], wherein after the application, heat treatment is carried out at a temperature of at least 1,200°C.
[14] A glass melting furnace provided with a tin oxide monolithic refractory obtained by applying the powder composition for tin oxide monolithic refractory as defined in any one of [1] to [11].
[15] A waste melting furnace provided with a tin oxide monolithic refractory obtained by applying the powder composition for tin oxide monolithic refractory as defined in any one of [1] to [11].

### ADVANTAGEOUS EFFECTS OF INVENTION

According to the powder composition for tin oxide monolithic refractory and the method for producing a tin oxide monolithic refractory of the present invention, it is possible to obtain a refractory which contains SnO₂ having a high erosion resistance to slag and ZrO₂ and SiO₂ highly effective to prevent volatilization of SnO₂ in a high temperature zone, in good balance, whereby it is possible to provide a highly erosion resistant monolithic refractory which is capable of exhibiting excellent volatilization preventing effects from the initial stage after initiation of volatilization of SnO₂ without substantially lowering the erosion resistance to glass. Further, this monolithic refractory can be applied in conformity with the shape of an application object, and therefore, it can be applied widely without limitation to the object.

Further, the glass melting furnace and the waste melting furnace of the present invention are provided with a monolithic refractory obtained by applying the above powder composition for tin oxide monolithic refractory, whereby they can be formed densely without void spaces in walls, etc. and exhibit excellent fire resistance, and since they have a tin oxide monolithic refractory which exhibits an effect to prevent volatilization of SnO₂ and is excellent in erosion resistance to slag, it is possible to prolong the service life of the furnaces.

### DESCRIPTION OF EMBODIMENTS

The powder composition for tin oxide monolithic refractory of the present invention is characterized in that it comprises a refractory mixture so that the contents of SnO₂, ZrO₂ and SiO₂ in the tin oxide refractory would be the predetermined amounts. Now, the present invention will be described in detail.

The powder composition for tin oxide monolithic refractory of the present invention comprises, as aggregates, a refractory mixture containing SnO₂ and ZrO₂ as essential components.

SnO₂ to be used in the present invention has high resistance to erosion by slag and high heat resistance, and thus is incorporated as the main component of the monolithic refractory.

ZrO₂ to be used in the present invention is a component which has high resistance to erosion by molten slag and further has a function to prevent volatilization of SnO₂ being the main component of the monolithic refractory.

SiO₂ to be used in the present invention is a component to form matrix glass and to provide a stress relaxation function. Further, it is a component having a function to prevent volatilization of SnO₂ being the main component in the monolithic refractory.

The powder composition for tin oxide monolithic refractory of the present invention preferably contains a binder in addition to the refractory mixture. The binder is a binder component to be used to improve the applicability of the monolithic refractory. When this component is contained, the strength of a molded product after the application will be improved, whereby the applicability will be improved. On the other hand, the resistance to slag is low, and it may hinder formation of necks of tin oxide and zirconia particles.

The type and amount of such a binder to be used in the present invention are not particularly different from those used in conventional monolithic refractories. For example, alumina cement, colloidal alumina, magnesia cement, a phosphate, a silicate, etc. may be used. Among them, preferred is alumina cement, colloidal alumina or colloidal silica, and more preferred is alumina cement. The amount of such a binder to be used, is preferably from 0 to 10 mass%, more preferably from 0 to 5 mass%, in the refractory mixture. Here, colloidal alumina, colloidal silica, etc. are aqueous solutions, but the amount to be used in the present invention is represented as calculated as solid material.

Further, the powder composition for tin oxide monolithic refractory of the present invention preferably contains a dispersant in addition to the refractory mixture. The dispersant imparts flowability at the time of application of the monolithic refractory. Specific types are not particularly limited and may, for example, be inorganic salts such as sodium tripolyphosphate, sodium hexametaphosphate, sodium ultrapolyphosphate, sodium acidic hexametaphosphate, sodium borate, sodium carbonate, a polymetaphosphate, etc., sodium citrate, sodium tartarate, sodium polyacrylate, sodium sulfonate, a polycarboxylate, a β-naththalene sulfonate, naphthalene sulfonate, a carboxy group-containing polyether type dispersant, etc.

The amount of the dispersant to be added, is preferably from 0.01 to 2 mass%, more preferably from 0.03 to 1 mass%, to 100 mass% of the refractory mixture.

In the powder composition for tin oxide monolithic refractory of the present invention, the total content of SnO₂, ZrO₂ and SiO₂ to be contained in the refractory mixture is set to be at least 70 mass%. The reason is such that if other components are contained too much in the refractory, the excellent erosion resistance of SnO₂ to glass is likely to be impaired. To maintain the erosion resistance to be good, the total content of SnO₂, ZrO₂ and SiO₂ is preferably at least 85 mass%, more preferably at least 95 mass%. Particularly preferably, the total content of SnO₂, ZrO₂ and SiO₂ is from 97 to 99.5 mass%.

Further, in the present invention, when the total content of SnO₂, ZrO₂ and SiO₂ is taken as 100 mol%, SnO₂ is contained in an amount of from 55 to 98 mol%, ZrO₂ is contained in an amount of from 1 to 30 mol%, and SiO₂ is contained in an amount of from 1 to 15 mol%. Preferred ranges of these will be described later.

Aggregates to be used as the refractory mixture are preferably employed in the form of particles, and the particle sizes of such particles are optionally adjusted by combining particles having different particle sizes e.g. coarse particles, medium particles, small particles and fine particles, with the maximum particle size being e.g. from 1 to 3 mm.

Further, for the purpose of imparting spalling resistance to the monolithic refractory, refractory aggregate having a coarser particle size of e.g. from 3 to 50 mm may be combined in addition to the above coarse, medium, small and fine particles.

Here, for example, when the coarse particles are less than 1,700 µm and at least 840 µm, the medium particles are less than 840 µm and at least 250 µm, the small particles are less than 250 µm and at least 75 µm, and the fine particles are less than 75 µm and at least 15 µm, these four types of aggregates are, respectively, prepared and mixed. If description is made only with respect to these four types of aggregates, when they are taken as 100 mass%, their proportions are preferably from 21 to 33 mass% of the coarse particles, from 15 to 28 mass% of the medium particles, from 30 to 45 mass% of the small particles, and from 5 to 18 mass% of the fine particles, from the viewpoint of packing of the green body. In this specification, the particle size is a value measured in accordance with JIS R2552. Such refractory raw materials may be ones obtained by pulverizing used refractory, refractory waste material, etc. and adjusting the particle sizes.

Further, it is preferred to incorporate, as an aggregate, a fine powder of powdery particles containing at least one member selected from the group consisting of tin oxide particles of less than 15 µm in particle size, zircon particles of less than 15 µm and solid-solution particles of tin oxide and zirconia of less than 15 µm. The particle size of such a fine powder to be used here, is preferably a fine powder of at most 10 µm, more preferably a finer powder of at most 3 µm. Here, a fine powder of at most 3 µm is particularly referred to as a finer powder.

As such powdery particles, it is preferred to incorporate the above-mentioned fine powder inclusive of a finer powder so as to be contained in an amount of from 1 to 10 mass% in the refractory mixture. By incorporating such a fine powder inclusive of a finer powder of powdery particles in the predetermined range, necks will be formed among tin oxide particles having larger particle sizes than such a fine powder, whereby it is possible to improve the erosion resistance to slag.

It is particularly preferred to incorporate a finer powder containing at least one member selected from the group consisting of tin oxide particles of at most 3 µm, zircon particles of at most 3 µm and solid-solution particles of tin oxide and zirconia of at most 3 µm in an amount of from 1 to 10 mass% in the refractory mixture, whereby it is possible to further improve the erosion resistance to slag.

By adjusting the contents of SnO₂, ZrO₂ and SiO₂ in the refractory mixture to be within the predetermined ranges and the relation of these components to have the predetermined relation as described above, it is possible to obtain a tin oxide monolithic refractory which prevents volatilization of SnO₂ in a high temperature zone from an early stage and which also has high erosion resistance to slag.

As a result of a study about the contents of SnO₂, ZrO₂ and SiO₂, the present inventors have discovered that in a case where without containing SiO₂, two i.e. SnO₂ and ZrO₂ are contained as the main components, ZrO₂ which exhibits an effect to prevent volatilization of SnO₂, is present as solid-solubilized in SnO₂. And, although the characteristics of the obtainable refractory are influenced by the temperature and the temperature raising rate at the time of heat treatment during or before use of the refractory, for example, in a case where it is heat-treated at 1,400°C for 5 hours, followed by cooling at a rate of 300°C/hr, the solid solubility limit concentration of ZrO₂ in SnO₂ was from about 20 to 25 mol%.

Whereas, when the composition is made to contain SiO₂ as in the present invention, the solid solubility limit concentration of ZrO₂ in SnO₂ substantially decreases to a level of about 12 mol%, although the cause is not clearly understood. Accordingly, in the composition range containing SiO₂, as compared with a case where without containing SiO₂, only ZrO₂ is contained, at the time when SnO₂ volatilizes at a high temperature, ZrO₂ solid-solubilized in SnO₂ reaches the solid solubility limit at an early stage and will be precipitated on the tin oxide particle surface. Therefore, it becomes possible to exhibit an excellent effect to prevent volatilization of SnO₂ from the initial stage after initiation of volatilization, as compared with the case where no SiO₂ is contained.

Further, the majority of silica present in an amorphous state among particles of tin oxide in which ZrO₂ is solid-solubilized (hereinafter referred to also as tin oxide-zirconia solid-solution) is reacted with zirconia precipitated beyond the solid solubility limit and thus is present as zircon among particles of the tin oxide-zirconia solid solution thereby to reduce the relative surface area of SnO₂. Therefore, the excellent volatilization preventing effect will be exhibited for a long period of time as compared with the case where ZrO₂ is contained without containing SiO₂.

Further, there may be zirconia which is not reacted with silica, and such zirconia also exhibits the volatilization preventing effect by itself. With respect to zircon and zirconia, their presence can be ascertained by using an electron microscopic apparatus such as SEM-EDX (Scanning Electron Microscope-Energy Dispersive X-ray Detector, manufactured by Hitachi High Technologies Corporation, trade name: S-3000H).

Here, the solid solubility limit was determined as an approximate solid solubility limit of ZrO₂ solid-solubilized in SnO₂ by analyzing by means of SEM-EDX the refractory structure with respect to refractories obtained by sintering at 1,400°C by changing the added amount of zircon.

The reason as to why the refractory mixture in the present invention is defined to have the above composition will be described as follows.

In a case where the contents of the respective components satisfy the relation that SnO₂ is from 55 to 98 mol%, ZrO₂ is from 1 to 30 mol% and SiO₂ is from 1 to 15 mol% when the total amount of SnO₂, ZrO₂ and SiO₂ is taken as 100 mol%, as mentioned above, the solid solubility limit concentration of ZrO₂ tends to be low, and zirconia will be precipitated on the tin oxide particle surface from an early stage of the initiation of volatilization of SnO₂. Accordingly, it is possible to exhibit an excellent effect to prevent volatilization of SnO₂ from an earlier stage, as compared with a case where no SiO₂ is contained. Further, the majority of silica is reacted with zirconia precipitated beyond the solid solubility limit and thus is present as zircon among particles of tin oxide-zirconia solid solution thereby to reduce the surface area of SnO₂ exposed to the external environment. Therefore, the excellent effect to prevent volatilization of SnO₂ will be exhibited for a long period of time as compared with the case where ZrO₂ is contained without containing SiO₂.

In this composition range, ZrO₂ is mainly in a state solid-solubilized in SnO₂, and a portion thereof which has exceeded the solid solubility limit, will be precipitated on the surface of tin oxide particles. The precipitated zirconia will be reacted with silica and be present as zircon on the surface of tin oxide-zirconia solid solution, but depending upon the amount of silica present, some unreacted one will be present as zirconia on the surface of tin oxide-zirconia solid solution.

SiO₂ is reacted with SnO₂, ZrO₂ and other components to form a structure present in an amorphous state among particles of tin oxide-zirconia solid solution and will be reacted, when zirconia is precipitated on the particle surface, with the zirconia to form zircon.

As described above, in the tin oxide monolithic refractory of the present invention, the solid-solubilized amount of ZrO₂ in SnO₂ reaches the solid solubility limit from an early stage of volatilization of SnO₂, and zircon and zirconia are formed in tin oxide, thereby to exhibit an excellent effect to prevent volatilization of SnO₂.

Further, a part of zircon precipitated on the tin oxide surface plays a role as necks to connect tin oxide particles to one another, and further, zircon has a strong resistance to erosion by molten slag and thus contributes to improvement of erosion resistance to slag.

The powder composition for tin oxide monolithic refractory of the present is made to have a construction containing such predetermined amounts of components, whereby, for example, when a monolithic refractory obtainable by its application is subjected to heat treatment at 1,300°C for 350 hours, a zircon phase and a zirconia phase will be formed on the tin oxide surface. Further, in a case where the SiO₂ content is at least 3 mol% based on the total content of SnO₂, ZrO₂ and SiO₂, a silica phase will also remain. Therefore, if such high temperature treatment is applied before use, it is possible to produce and use a refractory which is capable of exhibiting an excellent volatilization preventing effect from immediately after use.

At that time, if the content of SiO₂ becomes small at a level of less than 1 mol% based on the total content of SnO₂, ZrO₂ and SiO₂, no lowering phenomenon of the solid solubility limit concentration of ZrO₂ in SnO₂ tends to be observed, whereby development of the volatilization preventing effect in the initial stage after initiation of volatilization of SnO₂ tends to be late to some extent, and further, as the SiO₂ content is small, even if zirconia is precipitated, zircon will be formed only in a very small amount, and improvement of the volatilization preventing effect will be small.

Further, if the content of ZrO₂ becomes small at a level of less than 1 mol% based on the total content of SnO₂, ZrO₂ and SiO₂, the volatilization preventing effect by zirconia and zircon tends to be very small.

Further, if the content of SiO₂ becomes large at a level of exceeding 15 mol% based on the total content of SnO₂, ZrO₂ and SiO₂, the content of SiO₂ is too large whereby the content of SnO₂ tends to be small, thus leading to deterioration of the erosion resistance to slag. On the other hand, if the content of SiO₂ becomes small at a level of less than 1 mol% based on the total content of SnO₂, ZrO₂ and SiO₂, the effect to reduce the relative surface area of SnO₂ by the presence among particles of tin oxide-zirconia solid solution, tends to be small, such being undesirable.

Further, if the content of ZrO₂ becomes large at a level of exceeding 30 mol% based on the total content of SnO₂, ZrO₂ and SiO₂, the content of ZrO₂ is too large whereby the content of SnO₂ tends to be small, thus leading to deterioration of the erosion resistance to slag.

Here, in the tin oxide monolithic refractory of the present invention, the content of ZrO₂ is preferably within a range of from 1 to 12 mol% based on the total content of SnO₂, ZrO₂ and SiO₂. Further, the content of SiO₂ is also preferably within a range of from 1 to 12 mol% based on the total content of SnO₂, ZrO₂ and SiO₂. Accordingly, the content of SnO₂ is preferably within a range of from 76 to 98 mol% based on the total content of SnO₂, ZrO₂ and SiO₂.

Further, the conditions for heat treatment to be conducted before use do not depend on the above conditions, and the heat treatment is usually conducted at a temperature of from 1,200 to 1,600°C for from 3 to 5 hours, and therefore, the amounts of SnO₂, ZrO₂ and SiO₂ in the refractory composition may be adjusted depending upon the heat treatment conditions of actual treatment.

Further, to the above refractory mixture, other components may be incorporated within a range not to impair the properties as the refractory of the present invention. As such other components, known components to be used in tin oxide monolithic refractories may be mentioned.

Such other components may, for example, be oxides such as CuO, Cu₂O, ZnO, MnO, CoO, Li₂O, Al₂O₃, TiO₂, Ta₂O₅, Ce02, CaO, Sb₂O₃, Nb₂O₅, Bi₂O₃, UO₂, HfO₂, Cr₂O₃, MgO, SiO₂, etc.

Among these oxides, at least one oxide selected from the group consisting of CuO, ZnO, MnO, CoO and Li₂O₃, is preferably incorporated. Further, CuO, ZnO, MnO, CoO, Li₂O₃, etc. may effectively serve also as sintering assistants. When such a sintering assistant is incorporated, necks will be formed among tin oxide particles e.g. by sintering at 1,400°C for 5 hours, whereby it is possible to further improve the erosion resistance of the refractory. Accordingly, it is more preferred to incorporate at least one oxide selected from the group consisting of CuO, ZnO, MnO, CoO and Li₂O₃, and it is particularly preferred to incorporate CuO.

Further, a preferred powder composition for tin oxide monolithic refractory of the present invention is such a refractory that, for example, after a monolithic refractory obtained by application is subjected to heat treatment at 1,300°C under -700 mmHg for 350 hours, the volatilization rate is at most 1/5 as compared with a tin oxide monolithic refractory having a SnO₂ content of at least 99 mol%. At that time, the comparison is carried out by adjusting the open porosity difference between them to be at most 1%. Here, the open porosity is calculated by a known Archimedes method.

Now, the method for producing the tin oxide monolithic refractory of the present invention will be described.

Firstly, predetermined amounts of aggregates having particle sizes adjusted as described above, are weighed and uniformly mixed to obtain a refractory mixture; to this refractory mixture, a predetermined amount of a binder (powder raw material) and/or a predetermined amount of a dispersant is weighed and uniformly mixed; and further water is added, followed by uniformly mixing again to obtain a green body. Then, the obtained green body is applied or molded into a desired shape, followed by drying for application, to obtain a tin oxide monolithic refractory. Molding into a desired shape may be carried out, for example, by using a vibrating machine. Drying may be carried out by leaving the shaped body to stand at a temperature of about 40°C for 24 hours. Further, in order to increase the volatilization preventing effect from a stage before use, heat treatment may be preliminarily carried out at a high temperature of at least 1200°C, preferably from 1,300 to 1,450°C.

The raw material is not limited to the above-mentioned combination of powders, and, for example, a zircon powder may be used as raw material for ZrO₂ and SiO₂ being the volatilization preventing components. Zircon plays a role as necks to connect tin oxide particles to one another, in a case where ZrO₂ is solid-solubilized to the solid solubility limit concentration in SnO₂. Further, as raw material for SnO₂ and ZrO₂, for example, tin oxide particles wherein ZrO₂ is solid-solubilized, may be used. As such tin oxide particles wherein ZrO₂ is solid-solubilized, for example, particles obtained by pulverizing a tin oxide sintered body in which ZrO₂ is solid-solubilized, or particles obtained by pulverizing a monolithic refractory for reuse, may be used. Further, a powder of a simple substance metal such as Zr, Si or Cu, a metal salt compound containing such a metal, zirconium hydroxide (Zr(OH)₂), copper zirconate (CuZrO₃), copper carbonate (CuCO₃) or cupper hydroxide (Cu(OH)₂) may, for example, be used. Among them, copper zirconate (CuZrO₃) or copper carbonate (CuCO₃) is preferred.

In a case where a zircon powder is used as raw material for ZrO₂ and SiO₂ being the volatilization preventing components, SnO₂ functions as an agent to facilitate dissociation of zircon in such a range that the solid-solubilized amount of ZrO₂ in SnO₂ is at most 12 mol%, and therefore, for example, by heat treatment at 1,400°C for 5 hours, it is possible to dissociate zircon into zirconia and silica thereby to produce a tin oxide monolithic refractory of the present invention.

Further, in a case where a zircon powder is used as raw material, it is unnecessary to introduce raw materials of ZrO₂ and SiO₂ separately into a mixing apparatus, whereby the production process can be simplified. Further, mixing of the raw material powder becomes easy, and a uniform mixture is obtainable, which contributes to shortening of the production process and to stability of the product quality.

The method for producing the tin oxide monolithic refractory of the present invention may be conducted not only by the above molding or application method, but also by casting, injection, spraying, etc. In spraying, it is common that a mixed powder composition comprising aggregates, a binder and a dispersant is pneumatically transported by a nozzle, then application water is added at the nozzle portion, followed by spraying on e.g. a wall for application. This can be arranged by a known application method. For example, aggregates and a dispersant may be pneumatically transported by a nozzle, then, a part or whole of a binder, or a quick setting agent, etc. may be added to the transported particles at the nozzle portion, followed by application. Application water is adjusted to be, for example, preferably from 2 to 11 mass%, more preferably from 3 to 7 mass%, to the entire monolithic refractory. Further, this application is not limited to a new application to e.g. a wall and may be a supplemental application for maintenance and repair. Here, the quick setting agent is an admixture to quicken setting of the powder composition. Its specific type is not particularly limited, and for example, a salt of nitrous acid, a sulfate, an aluminate or a carbonate may be used. Its amount to be added, is preferably from 1 to 15 mass%, more preferably from 2 to 8 mass%, to 100 mass% of the refractory mixture.

In casting application, a dispersant and application water are preliminarily mixed to the refractory mixture to obtain a green body, and this green body is applied by using a formwork. Application water is, for example, preferably from 3 to 7 mass% to the entire monolithic refractory. At the time of the application, it is preferred to impart vibration to facilitate packing. After the application, aging and drying are carried out.

The application may be carried out directly to a glass melting furnace or a waste melting furnace, or a precast product prepared by preliminary application may be used. Otherwise, both of the direct application and the precast product may be combined. A glass melting furnace or a waste melting furnace thus obtained by applying the monolithic refractory of the present invention to its wall surface or ceiling, is preferred since it is thereby possible to obtain the above-mentioned effects of the monolithic refractory. Particularly preferred is one wherein the monolithic refractory of the present invention is provided on the inner wall of the furnace which is directly in contact with molten glass or molten slag.

Also in a case where the inner lining is applied by the monolithic refractory in a glass melting furnace or a waste melting furnace, refractory bricks may partly be used. Further, with respect to the type of the monolithic refractory, a monolithic refractory of a different material such as a heat-insulating monolithic refractory may be used at a site not directly in contact with a slag. In such a waste melting furnace wherein refractories of different materials are used at different zones, the monolithic refractory obtainable by the present invention exhibits its excellent erosion resistance effects as inner lining at a site where the service conditions are severest.

### EXAMPLES

Now, the present invention will be described specifically with reference to Examples and Comparative Examples, but it should be understood that the present invention is by no means restricted by such descriptions.

### (Ex. 1 to 28)

Firstly, as raw materials for producing powder compositions for tin oxide monolithic refractories, powder raw materials having average particle sizes, chemical components and purities as shown in Table 1 were prepared.

**Table 1**

| Raw material powder | Composition, mass% | Particle size µm |
|---|---|---|
| Tin oxide coarse particles | 99.0 | 1700-840 |
| Tin oxide medium particles | 99.0 | 840-250 |
| Tin oxide small particles | 99.0 | 250-75 |
| Tin oxide fine particles | 99.0 | 75-15 |
| Tin oxide fine powder | 99.0 | 10-3 |
| Tin oxide finer powder | 99.0 | 3-0.1 |
| 12 mol% zirconia-tin oxide coarse particles | 99.0 | 1700-840 |
| 12 mol% zirconia-tin oxide medium particles | 99.0 | 840-250 |
| 12 mol% zirconia-tin oxide small particles | 99.0 | 250-75 |
| 12 mol% zirconia-tin oxide fine particles | 99.0 | 75-15 |
| 12 mol% zirconia-tin oxide finer powder | 99.0 | 3-0.1 |
| Zirconia coarse particles | 99.0 | 1700-840 |
| Zirconia medium particles | 99.0 | 840-250 |
| Zirconia small particles | 99.0 | 250-75 |
| Zirconia fine particles | 99.0 | 75-15 |
| Alumina coarse particles | 99.9 | 1700-840 |
| Alumina medium particles | 99.9 | 840-250 |
| Alumina small particles | 99.9 | 250-75 |
| Alumina fine particles | 99.9 | 75-15 |
| Copper oxide finer powder | 99.9 | D₅₀=1.0 |
| Zinc oxide finer powder | 99.9 | D₅₀=1.0 |
| Zirconia finer powder | 99.9 | D₅₀=1.0 |
| Silica finer powder | 99.9 | D₅₀=1.0 |
| Zircon finer powder | 99.5 | D₅₀=1.0 |

Then, respective powders of tin oxide, zirconia, silica, zircon, alumina, copper oxide, zinc oxide, etc., were mixed in proportions as shown in Table 2. In Table 2, "Zirconia-tin oxide" is meant for the "12 mol% zirconia-tin oxide" shown in Table 1 and meant to be tin oxide particles wherein 12 mol% of ZrO₂ is solid-solubilized. Such particles are ones obtained by preparing a tin oxide sintered body wherein 12 mol% of ZrO₂ is solid-solubilized, followed by pulverization by means of a jaw crusher (manufactured by Retsch, BB51WC/WC) and classification by sieving. Here, the tin oxide sintered body wherein 12 mol% of ZrO₂ is solid-solubilized, was obtained in such a manner that 88 mol% of tin oxide powder, 12 mol% of zirconia powder and copper oxide powder in an amount of 0.5 mass% to the total amount of SnO₂ and ZrO₂, were mixed and pulverized for 48 hours by means of a rotary ball mill using ethanol as a medium, then, the obtained slurry was dried under reduced pressure, followed by isostatic pressing under 147 MPa to obtain a molded product, and the obtained molded product was fired at 1,400°C for 5 hours in the atmospheric air.

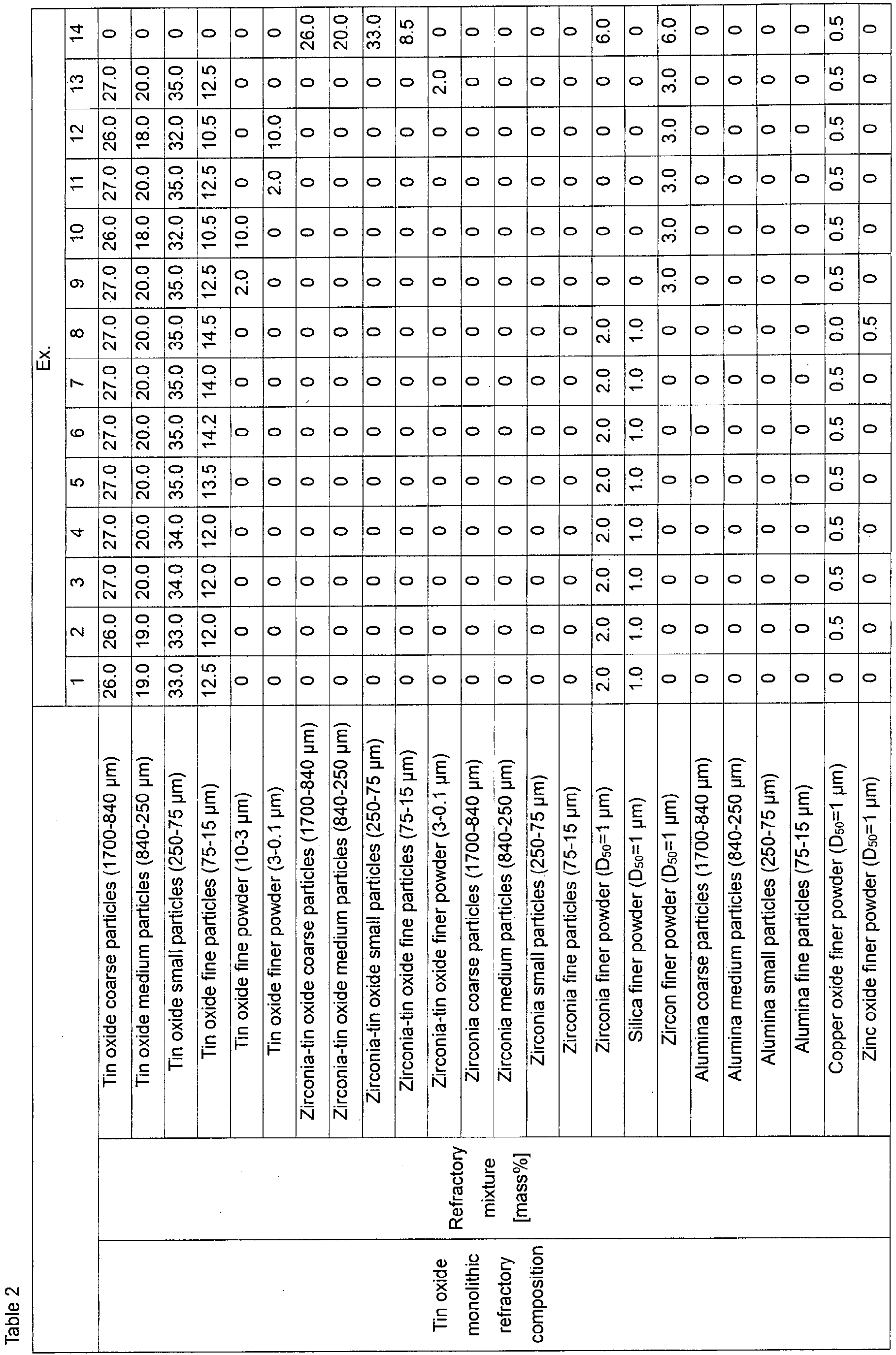

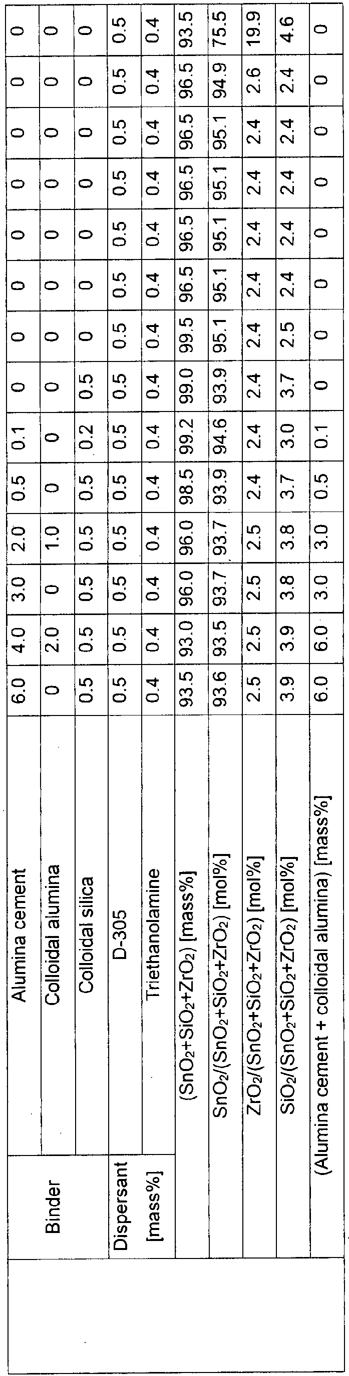

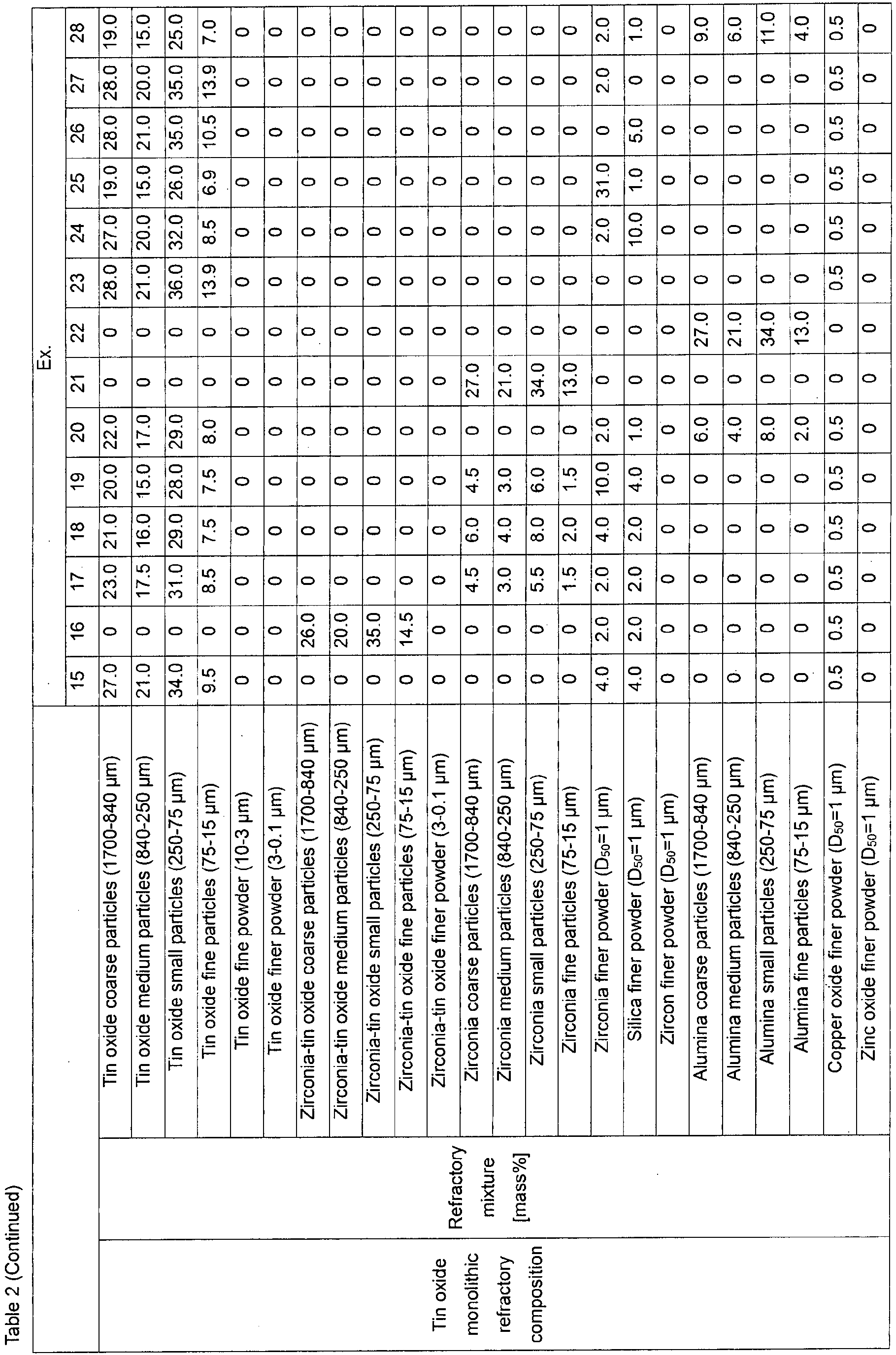

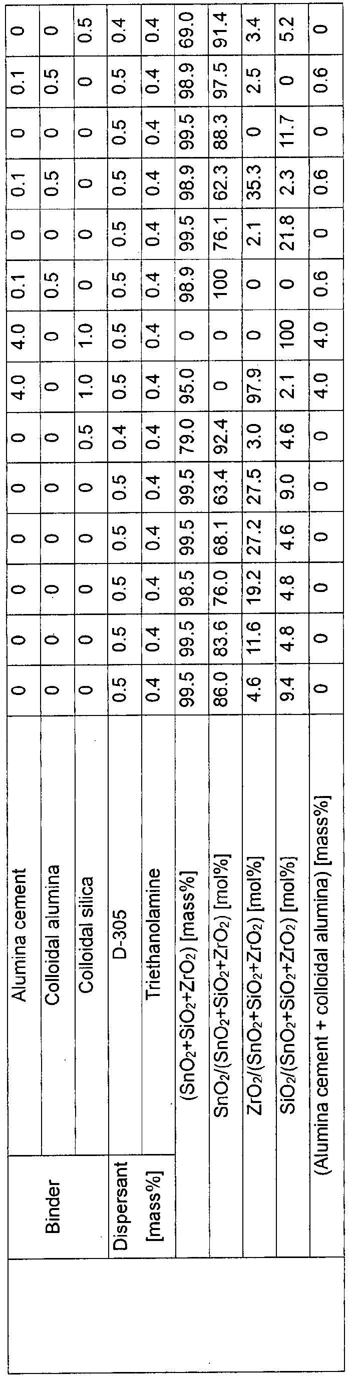

As shown in Table 2, as raw materials to be used as a refractory mixture, coarse particles (at least 840 µm and less than 1,700 µm), medium particles (at least 250 µm and less than 840 µm), small particles (at least 75 µm and less than 250 µm), fine particles (at least 15 µm and less than 75 µm), fine powder (more than 3 µm and at most 10 µm) and finer powder (at least 0.1 µm and at most 3 µm) were used in combination.

In Tables 1 and 2, the respective particle sizes are represented as (1700-840 µm), (840-250 µm), (250-75 µm), (75-15 µm), (10-3 µm) and (3-0.1 µm), but these representations are meant to have the above meanings.

The blended raw material powders were uniformly mixed, then, predetermined amounts of water and a dispersant were added, followed by mixing uniformly again, and a molded product was prepared by using a vibration machine (manufactured by Sinfonia Technology Co., Ltd., trade name: Vibratory Packer VP-40). The obtained molded product was dried at 40°C for 24 hours in the atmospheric air atmosphere, then held at 1400°C for 5 hours for firing and then cooled at a rate of 300°C/hr. to obtain a tin oxide monolithic refractory.

A test piece having a diameter of 15 mm and a height of 5 mm was cut out from a part of the obtained tin oxide monolithic refractory and heat-treated at 1,300°C in an environment of -700 mmHg for from 10 to 400 hours, whereby the mass reduction in each case was measured (using GH-252, trade name, manufactured by A&D Company Limited), and the volatilization amount (unit: mg) and the volatilization rate (unit: mg/hr) were calculated.

Further, a test piece of 15 mm x 25 mm x 50 mm (longitudinal x side x length) cut out from the obtained tin oxide monolithic refractory was immersed in soda lime glass (manufactured by Asahi Glass Co., Ltd., trade name: Sun Green VFL) at 1,300°C for 100 hours in the atmospheric air atmosphere, whereupon the erosion degree was measured, and the erosion resistance was investigated. The data of the volatilization rate and the erosion degree obtained as described above are summarized in Table 3.

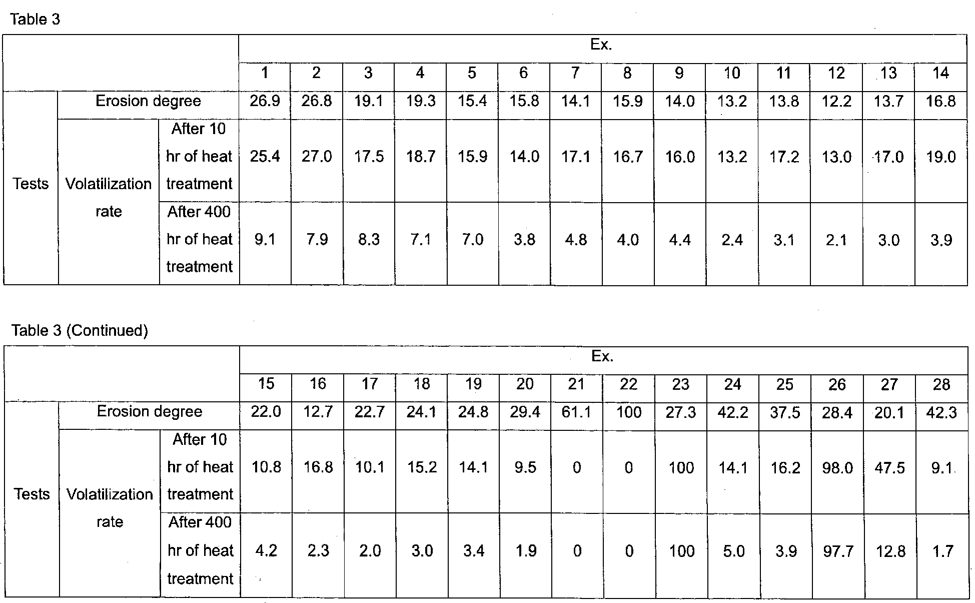

In Tables 2 and 3, Ex. 1 to 20 are Examples of the present invention, and Ex. 21 to 28 are Comparative Examples.

The erosion resistance to glass in each of Examples and Comparative Examples was compared with the alumina monolithic refractory in Ex. 22 which is widely used in glass production apparatus, at a temperature region of 1,300°C, and was represented by an erosion degree relative to the maximum erosion depth being 100, of the eroded portion after the erosion test of the alumina monolithic refractory.

Further, the volatilization rate in each of Ex. 1 to 20 and Ex. 21 to 28 was represented by a volatilization rate relative to the volatilization rate being 100 after the test piece in Ex. 23 was heat-treated at 1,300°C in an environment of -700 mmHg for 10 hours and 400 hours. Here, as the respective volatilization rates after the heat treatment for 10 hours and 350 hours, an average volatilization rate per unit surface area calculated from the mass reduction during the heat treatment time of from 0 hour to 10 hours, and an average volatilization rate per unit surface area calculated from the mass reduction during the heat treatment time of from 350 hours to 400 hours, are relatively shown.

Further, the open porosity of each sample was measured by an Archimedes method, and in each case, a sample with an open porosity difference being at most 2.0% was used.

Ex. 21 represents a zirconia monolithic refractory, whereby no volatilization occurs, but the erosion resistance to glass is lower than in Ex. 1 to 20.

Ex. 22 represents an alumina monolithic refractory, whereby no volatilization occurs, but the erosion resistance to glass is lower than in Ex. 1 to 20.

Ex. 23 represents a tin oxide monolithic refractory having a composition excluding ZrO₂ and SiO₂, whereby the erosion resistance to glass is substantially equal to the level in Ex. 1 to 20, but since no volatilization preventing component is contained, the volatilization rate of SnO₂ is very fast.

Ex. 24 represents a tin oxide monolithic refractory having a composition wherein the amount of SiO₂ is increased, whereby the volatilization rate is substantially equal to the level in Ex. 1 to 20, but since the content of SnO₂ is small, the erosion resistance to glass is lower than in Ex. 1 to 20.

Ex. 25 represents a tin oxide monolithic refractory having a composition wherein the amount of ZrO₂ is increased, whereby the volatilization rate is substantially equal to the level in Ex. 1 to 20, but since the content of SnO₂ is small, the erosion resistance to glass is lower than in Ex. 1 to 20.

Ex. 26 represents a tin oxide monolithic refractory having a composition excluding ZrO₂, whereby the erosion resistance to glass is substantially equal to the level in Ex. 1 to 20, but since ZrO₂ as a volatilization preventing component is not contained, the volatilization rate of SnO₂ is very fast.

Ex. 27 represents a tin oxide monolithic refractory having a composition excluding SiO₂, whereby the erosion resistance to glass is substantially equal to the level in Ex. 1 to 20, but since no SiO₂ is contained, the solid solubility limit concentration of ZrO₂ in SnO₂ is high. Further, the content of ZrO₂ as a volatilization preventing component is small, whereby it takes time till ZrO₂ reaches the solid solubility limit concentration by volatilization of SnO₂, and the volatilization rate of SnO₂ after 10 hours of the heat treatment is faster than in Ex. 1 to 20. Further, since no SiO₂ is contained, also after 350 hours of heat treatment, the volatilization rate of SnO₂ is fast as compared with Ex. 1 to 20.

Ex. 28 represents a tin oxide monolithic refractory having a composition wherein Al₂O₃ was incorporated as another component, whereby the volatilization rate is substantially equal to the level in Ex. 1 to 20, but since the content of SnO₂ is small, the erosion resistance to glass is lower than in Ex. 1 to 20.

On the other hand, Ex. 1 to 20 representing Examples of the present invention present results such that the volatilization rate and the erosion resistance to glass are better as compared with Ex. 21 to 28.

Ex. 3 to 20 represent tin oxide monolithic refractories having compositions wherein the content of a binder composed of alumina cement and/or colloidal alumina is adjusted to be at most 5 mass%, whereby the erosion resistance to glass is higher than in Ex. 1 and Ex. 2.

Ex. 9 to 14 represent tin oxide monolithic refractories using tin oxide particles of at most 10 µm (Ex. 9 to 12), tin oxide particles of at most 10 µm wherein 12 mol% of ZrO₂ is solid-solubilized (Ex. 13 and 14), and zircon particles of at most 10 µm (Ex. 9 to 14), whereby necks to connect tin oxide particles one another are likely to be formed, and the erosion resistance to glass is higher than in Ex. 1 to 8.

From these evaluation results, it has been made clear that as compared with the tin oxide monolithic refractories in Comparative Examples, the tin oxide monolithic refractories in Examples of the present invention are excellent tin oxide monolithic refractories each being highly effective to prevent volatilization of SnO₂ and having a high erosion resistance to glass, with a good balance of both physical properties.

Further, it has been found that when, as a raw material in the refractory mixture, a fine powder inclusive of a finer powder of at least one member selected from the group consisting of tin oxide particles of at most 10 µm and solid solution particles of tin oxide and zirconia, of at most 10 µm, is contained in an amount of from 1 to 10 mass% in the refractory mixture, such fine particles will form necks to connect tin oxide particles one another thereby to improve the erosion resistance to slag. Further, such formation of necks among tin oxide particles one another is considered to lower the flowability of gas in the monolithic refractory thereby to contribute to suppression of the volatilization rate.

### INDUSTRIAL APPLICABILITY

A monolithic refractory obtainable by the powder composition for tin oxide monolithic refractory of the present invention is excellent in erosion resistance to slag and capable of effectively preventing volatilization of SnO₂, etc., and thus is useful as a monolithic refractory for a glass melting furnace and a waste melting furnace.

The entire disclosure of Japanese Patent Application No. 2013-133688 filed on June 26, 2013 including specification, claims, drawings and summary is incorporated herein by reference in its entirety.

## Claims

1. A powder composition for tin oxide monolithic refractory comprising a refractory mixture containing SnO₂, ZrO₂ and SiO₂ as essential components, wherein the total content of SnO₂, ZrO₂ and SiO₂ in the refractory mixture is at least 70 mass%, and, based on the total content of SnO₂, ZrO₂ and SiO₂, the content of SnO₂ is from 55 to 98 mol%, the content of ZrO₂ is from 1 to 30 mol% and the content of SiO₂ is from 1 to 15 mol%.

2. The powder composition for tin oxide monolithic refractory according to Claim 1, wherein the total content of SnO₂, ZrO₂ and SiO₂ in the refractory mixture is at least 95 mass%.

3. The powder composition for tin oxide monolithic refractory according to Claim 1 or 2, wherein, based on the total content of SnO₂, ZrO₂ and SiO₂, the content of SnO₂ is from 70 to 98 mol%, the content of ZrO₂ is from 1 to 20 mol% and the content of SiO₂ is from 1 to 10 mol%.

4. The powder composition for tin oxide monolithic refractory according to Claim 3, wherein, based on the total content of SnO₂, ZrO₂ and SiO₂, the content of SnO₂ is from 83 to 98 mol%, the content of ZrO₂ is from 1 to 12 mol% and the content of SiO₂ is from 1 to 5 mol%.

5. The powder composition for tin oxide monolithic refractory according to any one of Claims 1 to 4, which contains in the refractory mixture from 1 to 10 mass% of a fine powder inclusive of a finer powder, containing at least one member selected from the group consisting of tin oxide particles, zircon particles and solid-solution particles of tin oxide and zirconia, of at most 10 µm.

6. The powder composition for tin oxide monolithic refractory according to any one of Claims 1 to 5, which contains in the refractory mixture from 1 to 10 mass% of a finer powder containing at least one member selected from the group consisting of tin oxide particles, zircon particles and solid-solution particles of tin oxide and zirconia, of at most 3 µm.

7. The powder composition for tin oxide monolithic refractory according to any one of Claims 1 to 6, which further contains in the refractory mixture at least one component selected from the group consisting of oxides of CuO, ZnO, MnO, CoO and Li₂O.

8. The powder composition for tin oxide monolithic refractory according to any one of Claims 1 to 7, which contains a dispersant in an amount of from 0.01 to 2 mass% to the mass of the refractory mixture.

9. The powder composition for tin oxide monolithic refractory according to any one of Claims 1 to 8, which contains, as a binder, at least one member selected from the group consisting of alumina cement and colloidal alumina, and the content of the binder in the refractory mixture is at most 5 mass%.

10. The powder composition for tin oxide monolithic refractory according to any one of Claims 1 to 9, wherein as the refractory mixture, tin oxide particles wherein from 1 to 25 mol% of ZrO₂ is solid-solubilized, are used.

11. The powder composition for tin oxide monolithic refractory according to any one of Claims 1 to 10, wherein when the powder composition for tin oxide monolithic refractory is heat-treated at 1,300°C for 350 hours after its application, a zircon phase and a zirconia phase are formed on the surface of tin oxide particles.

12. A method for producing a tin oxide monolithic refractory, which comprises kneading the powder composition for tin oxide monolithic refractory as defined in any one of Claims 1 to 11, with water, followed by its application.

13. The method for producing a tin oxide monolithic refractory according to Claim 12, wherein after the application, heat treatment is carried out at a temperature of at least 1,200°C.

14. A glass melting furnace provided with a tin oxide monolithic refractory obtained by applying the powder composition for tin oxide monolithic refractory as defined in any one of Claims 1 to 11.

15. A waste melting furnace provided with a tin oxide monolithic refractory obtained by applying the powder composition for tin oxide monolithic refractory as defined in any one of Claims 1 to 11.
